# EUROPÄISCHE PATENTSCHRIFT

(11) **EP 1 590 153 B1**
(45) Veröffentlichungstag und Bekanntmachung des Hinweises auf die Patenterteilung: **26.03.2008**
(21) Anmeldenummer: 04706593.3
(22) Anmeldetag: 30.01.2004
(51) Int. Cl.: B29C 45/16

(54) **KOINJEKTIONS-DÜSE**
COINJECTION NOZZLE
BUSE DE CO-INJECTION

(30) Priorität: 31.01.2003 CH 1422003
(43) Veröffentlichungstag der Anmeldung: 02.11.2005
(73) Patentinhaber: Otto Hofstetter AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Alder, Hans Rudi
(86) Internationale Anmeldenummer: PCT/CH2004/000050
(87) Internationale Veröffentlichungsnummer: WO 2004/067254

(56) Entgegenhaltungen:
- EP-A- 0 321 678
- EP-A- 0 911 137
- US-A- 4 412 807
- US-A- 5 200 207
- PATENT ABSTRACTS OF JAPAN Bd. 1999, Nr. 08, 30. Juni 1999 (1999-06-30) -& JP 11 077759 A (SEKISUI CHEM CO LTD), 23. März 1999 (1999-03-23)
- PATENT ABSTRACTS OF JAPAN Bd. 1998, Nr. 05, 30. April 1998 (1998-04-30) -& JP 10 016005 A (VICTOR CO OF JAPAN LTD), 20. Januar 1998 (1998-01-20)
- PATENT ABSTRACTS OF JAPAN Bd. 1996, Nr. 02, 29. Februar 1996 (1996-02-29) & JP 7 251428 A (DAICEL CHEM IND LTD), 3. Oktober 1995 (1995-10-03)

## Beschreibung

Die vorliegende Erfindung betrifft eine Koinjektions-Düse für ein Zwei-Komponenten-Spritzgiess-Formwerkzeug gemäss Oberbegriff des Anspruchs 1.

Derartige Koinjektions-Düsen finden ihre Verwendung in Spritzgiess-Formwerkzeugen, wie sie beispielsweise bei der Herstellung von mehrschichtigen Vorformlingen, insbesondere von zum Blasrecken geeigneten und mit einer Sperrschicht aus Nylon® versehenen Vorformlingen aus PET, verwendet werden.

Eine Vorrichtung, mit welcher solche mehrschichtigen Vorformlinge hergestellt werden können, ist beispielsweise in DE 35 19 921 beschrieben. In dieser Patentschrift wird eine Heisskanaldüse zum Spritzgiessen eines mehrschichtigen Körpers aus zwei Komponenten offenbart. Diese Heisskanaldüse weist zwei konzentrisch angeordnete, beheizte Angusskanäle für die Zuführung eines ersten Materials für den ersten Angusskanal und eines zweiten Materials für den zweiten Angusskanal auf. Im inneren Angusskanal befindet sich ein Stiftbauteil bzw. eine Düsennadel, die pneumatisch hin und her bewegt werden kann. Mittels dieser Düsennadel wird das Einspritzen der beiden Komponenten geregelt. Bei dieser Düse wird eine Komponente des Kunststoffmaterials im Innern der Düse entlang der Düsennadel geführt. Bei dieser Art von Düse hat sich gezeigt, dass das aufgeschmolzene Kunststoffmaterial, und insbesondere die dünnflüssigere, d.h. die weniger viskose Komponente, zwischen der Düsennadel und der Nadelführung in den Heissläuferblock und die pneumatische Vorrichtung kriecht und sich dort festsetzt. Dies hat den Nachteil, dass Material, das sich dort festsetzt, sich auch, zumindest teilweise, zersetzt. Setzt sich z.B. PET fest, so bildet sich Acetaldehyd, das insbesondere bei Getränken und anderen Lebensmitteln zu einer unakzeptablen Geschmacksbeeinträchtigung führt. Setzt sich Material an den angegebenen Stellen fest, so hat dies auch eine Beeinträchtigung der Nadelbewegung zur Folge. Im Extremfall wird die Düsennadel vollständig immobil. Je nach dem, in welcher Stellung die blockierte Düsennadel sich befindet, hat dies zur Folge, dass kein Material mehr austritt oder, aber, Material ständig ausfliesst. Tritt ständig Material aus, so führt dies einerseits zu einer unerwünschten Fadenbildung, und andererseits zu einer Verschmutzung der Formplatten, was eine zeitintensive Reinigung nach sich zieht. Ferner, ist ohne weiteres ersichtlich, dass es äusserst aufwändig ist, bei Werkzeugen für die gleichzeitige Herstellung von 48, 96 oder mehr Vorformlingen, derart beeinträchtigte Düsen im Werkzeug zu lokalisieren und zu reparieren. Alles in allem erweist sich eine derartige Düse als sehr wartungsintensiv. Um zu vermeiden, dass es während des Spritzvorgangs zu Leckagen kommt, muss zudem bei einem relativ tiefen Förderdruck gearbeitet werden, was sich unmittelbar auf die produzierte Zahl von Vorformlingen pro Zeiteinheit bzw. die Wirtschaftlichkeit des Werkzeugs auswirkt. Diese Düse hat auch den Nachteil, dass sich in der Düsenspitze die zwei Komponenten mit einander vermischen, was insbesondere bei der Herstellung von Vorformlingen für die Getränkeindustrie nicht akzeptabel ist.

In der US-5,200,207 wird eine Heissläufer-Koinjektionsvorrichtung beschrieben, welche vorgesehen ist, um mehrschichtige Vorvormlinge zu fertigen. Diese Vorrichtung umfasst mindestens zwei Reservoire für unterschiedliche Kunststoffe und eine Ventilanordnung, mit welcher die Kunststoffe aus diesen Reservoiren in unterschiedliche Düsenkanäle geleitet werden können. Die Düsenspitze dieser Vorrichtung weist keine besonderen technischen Merkmale auf, welche ein Durchmischen der unterschiedlichen Kunststoffe im Einspritzbereich verhindern.

Eine weitere Vorrichtung, mit welcher solche mehrschichtigen Vorformlinge hergestellt werden können, ist in EP 0 647 514 beschrieben. Diese Patentschrift offenbart ein Mehrplattenformwerkzeug mit mehreren Formkavitäten, das aus gegen einander verschiebbaren Platten aufgebaut ist und einen Heisskanalverteilerblock aufweist. Die Heisskanaldüsen sind mit pneumatischen Nadelverschlussanordnungen zum Freigeben respektive Absperren der einzelnen Komponenten ausgerüstet. Auch bei dieser Heisskanaldüse wird eine Komponente des Kunststoffmaterials im Innern der Düse entlang der Düsennadel geführt. Um zu verhindern, dass aufgeschmolzenes Kunststoffmaterial zwischen die Düsennadel und die Nadelführung in den Heissiäuferblock und die pneumatische Vorrichtung kriecht und sich dort festsetzt, ist im Düsenhalter eine gasdichte Axialdichtung aus temperaturbeständigem Kunststoff angebracht. Diese Dichtung macht es möglich, bei einem Förderdruck von 900 bis 1000 bar zu arbeiten, was eine wesentliche Verbesserung zur vorgehend beschriebenen Düse darstellt. Es hat sich jedoch gezeigt, dass auch bei dieser Düsenart Leckagen zwischen Düsennadel und Nadelführung nicht vollständig unterbunden werden können, sodass es auch hier zur Zersetzung von Material kommt. Dieser Nachteil ist, wie gesagt, insbesondere in der Getränkeindustrie nicht akzeptabel. Ferner, weist auch diese Düse den Nachteil auf, dass sich in der Düsenspitze die zwei Komponenten mit einander vermischen. Nachteilhaft ist auch, dass die Gummidichtungen in regelmässigen Abständen ersetzt werden müssen, sind sie doch ständig dem heissen Material bzw. den Dämpfen der einzelnen, heissen Materialkomponenten ausgesetzt, was dazu führt, dass sie mit der Zeit spröde und damit undicht werden. Sind 48, 96 oder mehr Düsen vorhanden, so erweist sich das Auswechseln der Gummidichtungen als zeitintensiv.

Es ist deshalb Aufgabe der vorliegenden Erfindung, eine wartungsfreundliche Koinjektions-Düse für ein Zwei-Komponenten-Spritzgiess-Formwerkzeug zu schaffen, welche diese Nachteile nicht mehr aufweist. Insbesondere soll sie ein Arbeiten bei Förderdrucken von über 1000 bar ermöglichen, ohne dass es zu Leckagen zwischen der Düsennadel und der Nadelführung kommt. Ferner, soll sie wartungsfreundlich sein und ein Vermischen der beiden Komponenten in der Düsenspitze verhindern.

Erfindungsgemäss wird diese Aufgabe durch eine Koinjektions-Düse mit den Merkmalen des Anspruchs 1 gelöst, und insbesondere dadurch, dass eine Nadelführung bis in den Kopfbereich der Düse vorgesehen ist und keine der beiden Komponenten entlang der Nadel geführt wird. Erfindungsgemäss wird zwischen der Nadelführung und der Düsenspitze eine Düsenhülse angeordnet derart, dass einerseits zwischen der Düsenhülse und der Düsenspitze ein erster schlauchförmiger Zufuhrkanal für eine A-Komponente, und andererseits zwischen der Düsenhülse und der Nadelführung ein zweiter schlauchförmiger Zufuhrkanal für eine B-Komponente gebildet wird.

In einer bevorzugten Ausführungsform weist die Nadelführung im Kopfbereich der Düse einen konisch geformten Nadelführungskopf auf und ragt die Düsenhülse bis zu diesem Nadelführungskopf.

In einer Weiterbildung der erfindungsgemässen Düse ist die Düsenhülse an ihrem nadelführungskopfseitigen Ende aufgeweitet und bildet in dieser Art und Weise eine als Scherkante wirkende Verengung des ersten schlauchförmigen Zufuhrkanals. Mit dieser Verengung kann die Fliessfront des im ersten Zufuhrkanal geführten Materials ausgerichtet werden. In einer weiteren Ausführungsform sind der Nadelführungskopf und die Düsenhülse derart geformt, dass der zweite schlauchförmige Zufuhrkanal lokal verengt ist, um eine Scherkante zu bilden.

In einer weiteren, bevorzugten Ausführungsform wird für die Steuerung der Düsennadel eine einfache, pneumatische Kolbenanordnung verwendet. Diese einfache Kolbenanordnung vereinfacht die Steuerung der Nadelbewegungen, insbesondere bei Formwerkzeugen für die gleichzeitige Herstellung von 48 respektive 96 Vorformlingen in erheblicher Weise.

Weitere bevorzugte Ausführungsformen weisen die Merkmale der Unteransprüche auf.

Die Vorteile der erfindungsgemässen Koinjektions-Düse sind dem Fachmann unmittelbar ersichtlich. Weil die Nadelführung nicht zugleich als Zufuhrkanal für eine Materialkomponente dient, können Leckagen vollständig ausgeschlossen werden. Damit wird verhindert, dass eine Materialkomponente in den Heissläuferblock kriecht und sich dort festsetzen kann. Damit wird auch die Zersetzung von Komponentenmaterial verhindert. Dies erlaubt es, mit einem Förderdruck von über 1000 bar zu arbeiten, was die Wirtschaftlichkeit der Werkzeuge, die mit erfindungsgemässen Düsen ausgerüstet sind, deutlich erhöht. Ferner kann mit einer derart gestalteten Düse eine Vermischung der beiden Komponenten ausgeschlossen werden. Weil Leckagen ausgeschlossen sind und weil, wegen der Art der Zufuhrkanalführung auf besondere Dichtungen verzichtet werden kann, erweist sich die erfindungsgemässe Düse als äusserst wartungsfreundlich. Ferner, erlaubt diese Art der Zufuhrkanalführung die Verwendung einer einfachen pneumatischen Kolbenanordnung für den Nadelantrieb, da die Nadel hier nur zwischen zwei Stellungen (auf/zu) bewegt werden muss. Bei den zum Stand der Technik gehörenden Düsen muss die Nadel dagegen zwischen mindestens drei Stellungen bewegt werden.

Die Erfindung wird im Folgenden anhand von Ausführungsbeispielen und mit Hilfe der Figuren näher erläutert. Es zeigen:
- Fig. 1: eine räumliche Ansicht einer Zwei-Komponenten-Koinjektions-Düse;
- Fig. 2: ein Längsschnitt durch eine erfindungsgemässe Zwei-Komponenten-Koinjektions-Düse entlang dem Schnitt Y-Y in Figur 1;
- Fig. 3: ein Längsschnitt durch eine erfindungsgemässe Zwei-Komponenten-Koinjektions-Düse entlang dem Schnitt X-X in Figur 1; und
- Fig. 4: eine vergrösserte Darstellung des öffnungsseitigen Bereichs der in Figur 2 gezeigten Düse.

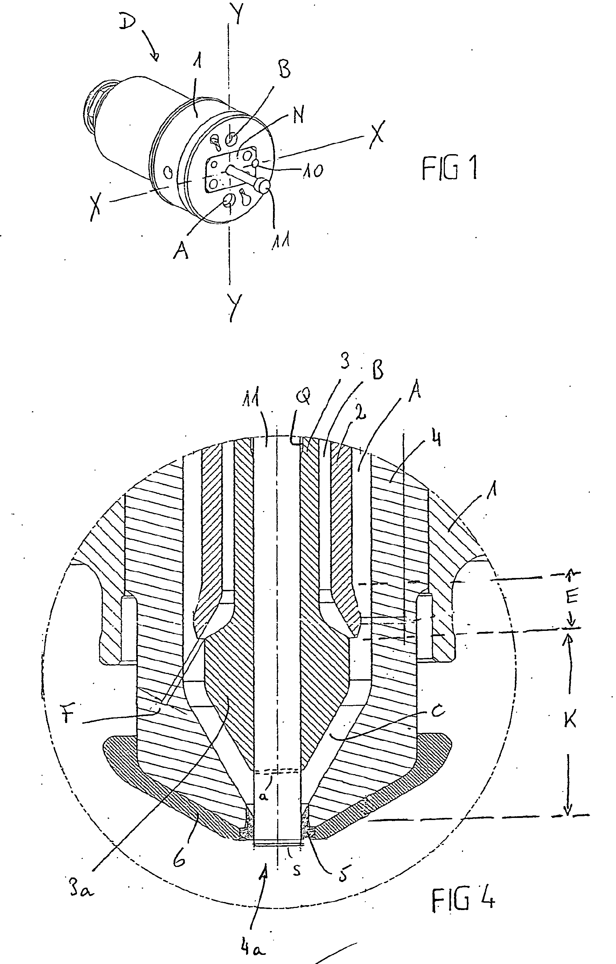

Figur 1 zeigt eine räumliche Ansicht einer erfindungsgemässen Koinjektions-Düse D mit einer ersten Zufuhröffnung für die Zufuhr einer A-Komponente und einer zweiten Zufuhröffnung für die Zufuhr einer B-Komponente. Ein Nadelführungssockel N ist bei dieser Ausführungsform als rechteckförmige Platte ausgebildet, um ein Verdrehen der Nadelführung zu verhindern. Dieser Nadelführungssockel N ist mit Hilfe eines zylindrischen Stiftes 10 an einem Düsenhalter 1 gesichert und dient der sicheren Führung der Düsennadel 11 innerhalb der Düse D.

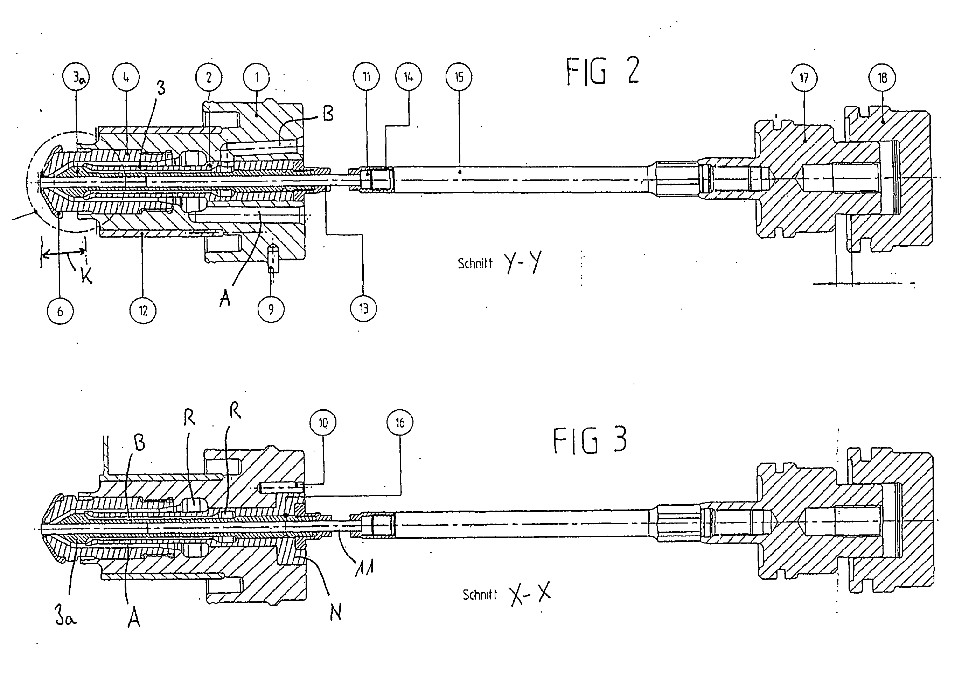

Eine bevorzugte Ausführungsform der erfindungsgemässen Düse ist in Figur 2 dargestellt. Diese Düse weist einen Düsenhalter 1 auf, der mit Hilfe eines zylindrischen Stiftes 9 in der Bodenplatte gesichert ist. In diesen Düsenhalter 1 sind zwei Zufuhrkanäle eingebracht, ein erster Zufuhrkanal A für eine A-Komponente und ein zweiter Zufuhrkanal B für eine B-Komponente. Austrittsseitig des Düsenhalters 1 ist eine Düsenspitze 4 in den Düsenhalter 1 eingeschraubt. Eine Düsenhülse 2 ist bodenplattenseitig im Düsenhalter 1 befestigt. Diese Düsenhülse 2 ragt ins Innere der Düsenspitze 4 und bildet mit der Düsenspitze 4 einen ersten schlauchförmigen Zufuhrkanal A für die Förderung einer A-Komponente. Bei dieser A-Komponente handelt es sich in der Regel um PET-Material, welches eine Temperatur von ca. 280°C - 300°C aufweist. Im Innern der Düsenhülse 2 ist eine Düsenführung 3 angeordnet derart, dass zwischen dieser Düsenführung 3 und der Düsenhülse 2 ein zweiter schlauchförmiger Zufuhrkanal B zur Führung der B-Komponente gebildet wird, d.h. die Zufuhrkanäle sind konzentrisch um die Nadelführung angeordnet. Bei dieser B-Komponente handelt es sich in der Regel um ein Sperrmaterial, wie beispielsweise Nylon®, welches eine Temperatur von ca. 260°C aufweist. Diese Düsenführung ragt bis in den Kopfbereich K der Düse und weist in diesem Bereich einen konisch geformten Nadelführungskopf 3a auf. Die Düsenführung 3 führt die Düsennadel 11 passgenau vom Nadelführungssockel N zum Nadelführungskopf 3a. In bekannter Art ist der Düsenhalter 1 im Bereich der Düsenspitze 4 mit einer Ringheizung 12 versehen. Die Düsennadel 11 ist über eine Nadelbefestigung 14 mit einer Kolbenverlängerung 15 verbunden. Diese Kolbenverlängerung 15 ist an einem Kolben17 befestigt, der in einem Zylinder 18 gleitend gelagert ist.

Figur 3 zeigt einen Längsschnitt entlang der Schnittlinie X-X gemäss Figur 1 durch die erfindungsgemässe Koinjektions-Düse. In der gezeigten Anordnung ist die Nadel 11 in einer Schliessstellung s, d.h. schliesst die Austrittsöffnung 4a der Düse. Für das Füllen einer Formkavität (nicht dargestellt) wird die Nadel 11 mit Hilfe des pneumatischen Antriebs in eine Arbeitsstellung a zurückgezogen und wird gleichzeitig die A-Komponente, vorzugsweise PET, durch den Zufuhrkanal A gedrückt, um einen ersten Teil der Formkavität zu füllen. In einem zweiten Verfahrensschritt wird die B-Komponente durch den Zufuhrkanal B gefördert. Bei dieser B-Komponente handelt es sich in der Regel um ein dünnflüssigeres Sperrmaterial, beispielsweise Nylon®. Wegen der niedrigeren Viskosität dieser B-Komponente fliesst diese im Innern der bereits im Kopfbereich K der Düse befindlichen A-Komponente mit höherer Viskosität und kommt deshalb nicht in Kontakt mit der Düsennadel 11. Damit wird offensichtlich, dass diese dünnflüssigere B-Komponente auch nicht zwischen die Düsennadel 11 und die Düsenführung 3 kriechen kann. In einem nächsten Verfahrensschritt wird die Düsennadel 11 wieder in ihre Schliessstellung s gebracht, um den Spritzgiessvorgang zu beenden. Der besondere Aufbau der erfindungsgemässen Düse vereinfacht also auch die Steuerung für die Bewegungen der Nadel 11, indem lediglich eine Schliessstellung s und eine Arbeitsstellung a erforderlich sind.

Figur 4 zeigt die geometrische Anordnung einer bevorzugten Ausführungsform des öffnungsseitigen Bereichs der erfindungsgemässen Düse im Detail. Die Düsenspitze 4 ist in den Düsenhalter 1 eingesetzt und weist an ihrer Austrittsöffnung 4a eine Wärmeschutzkappe 6 sowie einen Düseneinsatz 5 auf. Diese Wärmeschutzkappe 6 dient der thermischen Isolation gegenüber der kalten Formkavität. Der Innenraum C der Düsenspitze 4 läuft zur Austrittsöffnung 4a konisch zusammen, um ein laminares Fliessverhalten der einzuspritzenden Komponenten zu ermöglichen. Die Düsennadel 11 läuft passgenau in der Nadelführung 3 und kann zwischen einer Schliessstellung s und einer Arbeitsstellung a bewegt werden. Zwischen der Nadelführung 3 und der Düsenspitze 4 ist die Düsenhülse 2 derart angeordnet, dass einerseits zwischen der Düsenhülse 2 und der Düsenspitze 4 ein erster schlauchförmiger Zufuhrkanal A und andererseits zwischen der Düsenhülse 2 und der Nadelführung 3 ein zweiter schlauchförmiger Zufuhrkanal B gebildet wird. Im Kopfbereich K der Düse weist die Nadelführung 3 einen konisch geformten Nadelführungskopf 3a auf. In dieser gezeigten Ausführungsform ist die Düsenhülse 2 in einem Bereich E hinter dem Nadelführungskopf 3a aufgeweitet und erzeugt dadurch im Zufuhrkanal A eine Verengung, welche als Scherkante wirkt und im wesentlichen dazu führt, dass die Fliessfront der A-Komponente begradigt wird.

Weiterbildungen liegen im Bereich des normalen fachmännischen Handelns und sind insbesondere in der besonderen Formgebung für die Bildung der schlauchförmigen Zufuhrkanäle A, B zu sehen. Es versteht sich, dass die Dimensionierung der einzelnen Elemente vom verwendeten Material abhängig ist und der Fachmann auch weitere Scherkanten in den Zufuhrkanälen vorsehen kann. Darüber hinaus kann die Nadelführung nadelseitig Querrillen Q aufweisen. Es versteht sich, dass auch im Düsenhalter als auch in der Düsenhülse Auffangrillen R vorgesehen werden können.

## Patentansprüche

1. Koinjektions-Düse für ein Zwei-Komponenten-Spritzgiess-Formwerkzeug zur Herstellung von Vorformlingen, umfassend einen Düsenhalter (1) und eine darin angebrachte Düsenspitze (4), in welcher Düsenspitze (4) eine Nadel (11) angeordnet ist derart, dass sich zwischen der Nadel (11) und der Düsenspitze (4) ein schlauchförmiger Raum bildet,
wobei die Nadel (11) in mindestens einem Kopfbereich (K) der Düsenspitze (4) mit einer Nadelführung (3) versehen ist, wobei zwischen der Nadelführung (3) und der Düsenspitze (4) eine Düsenhülse (2) angeordnet ist derart, dass einerseits zwischen der Düsenhülse (2) und der Düsenspitze (4) ein erster schlauchförmiger Zufuhrkanal (A) und andererseits zwischen der Düsenhülse (2) und der Nadelführung (3) ein zweiter schlauchförmiger Zufuhrkanal (B) besteht, wobei
die Düsenhülse (2) bis hinter den Kopfbereich (K) der Düse reicht, wobei
die Nadelführung (3) im Kopfbereich (K) der Düse einen konisch geformten Nadelführungskopf (3a) aufweist, wobei
die Düsenhülse (2) bis hinter den Nadelführungskopf (3a) reicht,
**dadurch gekennzeichnet, dass** die Nadelführung (3) in einem Bereich (E) hinter dem Nadelführungskopf (3a) aufgeweitet ist und **dadurch** eine Verengung im ersten schlauchförmigen Zufuhrkanal (A) erzeugt.

2. Koinjektions-Düse nach Anspruch 1, **dadurch gekennzeichnet, dass** der Nadelführungskopf (3a) und die Düsenhülse (2) derart geformt sind, dass der zweite schlauchförmige Zufuhrkanal (B) in einem Bereich (E) hinter dem Nadelführungskopf (3a) verengt ist und eine Scherkante (F) bildet.

3. Koinjektions-Düse nach Anspruch 1, **dadurch gekennzeichnet, dass** die Düsennadel (11) in der Nadelführung (3) passgenau geführt ist.

4. Koinjektions-Düse nach Anspruch 3, **dadurch gekennzeichnet, dass** die Nadelführung (3) nadelseitig Querrillen (Q) aufweist.

5. Koinjektions-Düse nach Anspruch 3, **dadurch gekennzeichnet, dass** im Düsenhalter (1) und in der Düsenhülse (2) Auffangrillen (R) vorgesehen sind.

6. Koinjelctions-Düse nach Anspruch 1, **dadurch gekennzeichnet, dass** die Düsennadel (11) mit Hilfe einer einfachen pneumatischen Kolbenanordnung in eine Schliess- und in eine Arbeitsstellung bewegbar ist.

## Claims

1. A coinjection nozzle for a two-component injection molding tool for producing preforms, comprising a nozzle holder (1) and a nozzle tip (4) mounted therein, in which nozzle tip (4) there is arranged a needle (11) in such a manner that a tubular space is formed between the needle (11) and the nozzle tip (4), whereby the needle (11) is provided in at least one top region (K) of the nozzle tip (4) with a needle guide (3), whereby
between the needle guide (3) and the nozzle tip (4) there is arranged a nozzle sheath (2) in such a manner that, on the one hand, between the nozzle sheath (2) and the nozzle tip (4) there is a tubular supply duct (A) and, on the other hand, between the nozzle sheath (2) and the needle guide (3) there is a second supply duct (B), whereby
the nozzle sheath (2) extends behind the top portion (K) of the nozzle,
whereby
the needle guide (3) comprises a conically shaped needle guide head (3a) in the top portion (K) of the nozzle, whereby
the nozzle sheath (2) extends behind the needle guide head (3a),
**characterized in that** the needle guide (3) is enlarged in a region (E) behind the needle guide head (3a) and thus creates a stricture in the first tubular supply duct (A).

2. Coinjection nozzle according to claim 1 **characterized in that** the needle guide head (3a) and the nozzle sheath (2) are formed such that the second tubular supply duct (B) is strictured in a region (E) behind the needle guide head (3a) and forms a shear edge (F).

3. Coinjection nozzle according to claim 1, **characterized in that** the nozzle needle (11) is tightly fitted in the needle guide (3).

4. Coinjection nozzle according to claim 3 **characterized in that** the needle guide (3) comprises transverse grooves (Q) on the side towards the needle.

5. Coinjection nozzle according to claim 3 **characterized in that** in the nozzle guide (1) and in the nozzle sheath (2) catchment grooves (R) are provided.

6. Coinjection nozzle according to claim 1, **characterized in that** the nozzle needle (11) is movable into a closed and into an operating position by means of a simple pneumatic piston arrangement.

## Revendications

1. Buse de co-injection pour un outil de moulage par injection à deux composants permettant la fabrication de préformes, comprenant un porte-buse (1) et une pointe de buse (4) qui y est disposée, dans laquelle pointe de buse (4) est agencée une aiguille (11), de sorte à former une chambre tubulaire entre l'aiguille (11) et la pointe de buse (4),
l'aiguille (11) étant dotée d'un guide d'aiguille (3) dans au moins une zone de tête (K) de la pointe de buse (4),
une douille de buse (2) étant agencée entre le guide d'aiguille (3) et la pointe de buse (4), de sorte que d'un côté il y ait un premier canal d'alimentation (A) tubulaire entre la douille de buse (2) et la pointe de buse (4), et d'un autre côté un deuxième canal d'alimentation (B) tubulaire entre la douille de la buse (2) et le guide d'aiguille (3),
la douille de buse (2) allant jusque derrière la zone de tête (K) de la buse,
le guide d'aiguille (3) présentant une tête de guide d'aiguille (3a) formée de manière conique dans la zone de tête (K) de la buse,
la douille de buse (2) allant jusque derrière la tête de guide d'aiguille (3a),
**caractérisée en ce que** le guide d'aiguille (3) s'élargit dans une zone (E) derrière la tête de guide d'aiguille (3a) et **en ce qu'**il produit ainsi un rétrécissement dans le premier canal d'alimentation (A) tubulaire.

2. Buse de co-injection selon la revendication 1, **caractérisée en ce que** la tête de guide d'aiguille (3a) et la buse de douille (2) sont formées de sorte que le deuxième canal d'alimentation (B) tubulaire se resserre dans une zone (E) derrière la tête de guide d'aiguille (3a) et forme une arête de cisaillement (F).

3. Buse de co-injection selon la revendication 1, **caractérisée en ce que** l'aiguille de buse (11) est guidée précisément dans le guide d'aiguille (3).

4. Buse de co-injection selon la revendication 3, **caractérisée en ce que** le guide d'aiguille (3) présente des rainures transversales (Q) côté aiguille.

5. Buse de co-injection selon la revendication 3, **caractérisée en ce que** des rainures de réception (R) sont prévues dans le porte-buse (1) et dans la douille de buse (2).

6. Buse de co-injection selon la revendication 1, **caractérisée en ce que** l'aiguille de buse (11) peut être déplacée à l'aide d'une simple disposition à piston pneumatique dans une position de fermeture et dans une position de travail.
